Europäisches Patentamt

European Patent Office

Office européen des brevets

(19)

(11) Publication number: **0 084 938**
A2

# (12) EUROPEAN PATENT APPLICATION

(21) Application number: **83300156.3**

(22) Date of filing: **12.01.83**

(51) Int. Cl.³: **A 01 G 27/00**, A 01 G 25/02

(30) Priority: **14.01.82 GB 8201041**
**03.08.82 US 404790**
**16.10.82 GB 8229634**

(43) Date of publication of application: **03.08.83**
**Bulletin 83/31**

(84) Designated Contracting States: **AT BE CH DE FR GB IT LI LU NL SE**

(71) Applicant: **Hamilton, Malcolm Frank, 10 Missenden Gardens, Morden Surrey (GB)**

(72) Inventor: **Hamilton, Malcolm Frank, 10 Missenden Gardens, Morden Surrey (GB)**

(74) Representative: **Parker, Nigel Edward et al, H.N. & W.S. Skerrett Rutland House 148, Edmund Street, GB-Birmingham B3 2LQ (GB)**

(54) **Fluid supply system, a connector, a valve, an atomizer and a method of supplying water.**

(57) A fluid supply system 1 has a plastic bag reservoir 2 into which the other parts of the system may be packed. The other parts of the system include a flow pipe 5, a connector 6 to connect the pipe 5 to a wall of the reservoir 2 and fluid supply drip-valve outlets 8. The connector 6 may be arranged to puncture a hole in the reservoir wall and grip the wall as the parts of the connector are interengaged. Each drip-valve 15 is adjustable to vary the amount of fluid supplied from the reservoir 2 to a growbag 7. The parts 16 and 17 of the drip-valve 15 may be rotatated relative to one another to vary the drip-feed rate of fluid. An atomizer 1' comprising a connecting portion 2', end spray cap 3 and rotatable atomizing disc 4' may also be connected in the system.

-1-

## A FLUID SUPPLY SYSTEM, A CONNECTOR, A VALVE, AN ATOMIZER AND A METHOD OF SUPPLYING WATER.

This invention relates to a fluid supply system and more particularly but not exclusively to such a system including a reservoir in the form of a plastics bag which is, in use, connected to drip outlets, via a length of piping, which outlets are located, for example, above a grow-bag containing compost, and also relates to a connector to connect, for example, the bag to the piping; this invention also relates to a valve; to an atomizer which may be used to create a fine spray or mist particularly but not exclusively for horticultural applications, and to a method of supplying water to one or more supply outlets.

U.S. Patent Specification No. 3030952 shows a solution administration set for use in medical situations where it is essential for the plastics container of the system to be sterilized and remain sealed from the atmosphere during administration of the solution, and is concerned with administering fluid by way of a venipuncture needle.

An object of the fluid supply system of the present invention is to provide a fluid reservoir in which the remaining parts of the system may be wholly contained within the reservoir before connection to the reservoir so that access to said remaining parts is gained through an opening in the reservoir before said connection.

-2-

An object applicable to some embodiments of the fluid supply system is that the reservoir is sealed or closed in order to contain the said remaining parts, the reservoir being re-sealable or re-closable once the remaining parts have been connected to the reservoir, the remaining parts being, preferably, detachable from the reservoir so that the remaining parts may be selectively sealed or closed within the reservoir and connected up thereto a repeated number of times.

According to one aspect of the present invention there is provided a fluid supply system comprising a reservoir and at least one length of piping connectable, or connected, thereto by a connector, said connector having at least a first piece and a second piece which are capable of being, or which are, snap-locked together with a wall of the reservoir gripped therebetween, and with the connector surrounding a hole in the wall of the reservoir, the connector and said length of piping being co-operable to engage, or being in engagement with, each other so that, in use of the supply system, fluid is capable of being supplied from the reservoir through the connector and hole and through the length of piping to one or more supply outlets, said reservoir being of such size and dimensions relative to the remainder of the system that said remainder is adapted to be or is, wholly contained in said reservoir when said remainder is not connected to said reservoir.

0084938

-3-

The first piece alone may be co-operable to engage, or be in engagement with, said length of piping.

Further according to the present invention there is provided a connector suitable for use as the connector in the system as described in the immediately preceding paragraph.

Since access can be gained to the interior of the reservoir before connecting up the remaining parts thereto it is convenient to provide access to the part of the connector (first or second part) which is arranged inside the reservoir in use so that said part may be gripped directly when connecting the connector to reservoir unlike the situation as disclosed in U.S. Patent Specification No. 3080952 where the part of the connector in the bag has to be gripped indirectly through the wall of the bag.

In one embodiment of the connector the first and second pieces are generally tubular and one of the first and second pieces has a male connecting portion at one end thereof to snap into a female portion of the other one of the first and second pieces, and the female portion includes radially extending flange means to axially locate the male connecting portion in a snap-fit manner with the female portion. The female portion and/or the male portion may be resiliently deformed as said male portion is engaged therein.

In another embodiment of the connector, said

-4-

connector comprises a third piece, the first piece being a snap-fit engagement with the third piece and the second piece being a snap-fit engagement with one end of the third piece. The ends of the third piece may be substantially identical and the ends of the third piece may extend beyond the ends of the first piece so that the pipe may be attached to the end of the third piece not engaging, or not intended to engage, the second piece. The first piece may be substantially identical with the second piece. As the connector is assembled to the reservoir the first piece may not be resiliently deformed, but snap-locked against an abutment on the second piece substantially simultaneously as the second and third pieces are snap-locked together.

In the fluid supply system the connector may, or alternatively, may not be provided with means to puncture a hole in the wall of the reservoir, and this means may, or may alternatively not, be effected automatically as the first and second pieces are snap-locked together with said wall of the reservoir therebetween. The hole puncturing means may be provided on one of the first and second pieces or on the third piece. Hole puncturing means may be provided at each end of the third piece so that this piece is in effect resersible. The hole puncturing means is conveniently in the form of arrow-head shape.

Preferably, the first and second pieces flare outwardly at their ends which are, or which are to be held, adjacent in use, and said wall may be held, in

-5-

use, between said adjacent ends.

The connector may be releasably snap-lockable with a wall of the reservoir gripped therebetween. The connector is, preferably, of hard plastics.

Preferably the reservoir is a plastics bag, said wall of the reservoir is a frangible plastics membrane and preferably a snap-seal is provided at an open end of said reservoir.

It is an advantage of the system that the reservoir may contain all the other individual components of the system so that the reservoir may serve as the packaging for the system, thereby eliminating the costs in supplying the system to the consumer, which would normally include the costs of packaging.

Still further according to the invention there is provided a fluid supply system in combination with one or more drip-feed valves and/or one or more atomizers. The drip-feed valve or valves, preferably, have a finely controllable drip-feed flow rate.

Still further according to the present invention there is provided a method of supplying water to one or more supply outlets using the fluid supply system according to the statement of invention on page 1 of this specification in which rainwater is delivered from a rainwater guttering (for example of a greenhouse) or the like to the reservoir, and, preferably in which a top portion of the reservoir is fixed above the level of the rainwater guttering so that the reservoir cannot overflow.

-6-

The fluid supply system may also include the further piping and connectors necessary to connect the reservoir to the guttering as well as possibly hooks to hook the reservoir to the guttering.

Filters may be employed at any convenient place or places within the system, particularly where rainwater is taken from a guttering (an appropriate place for a filter being at the guttering). A filter may comprise a mesh disc which is incorporated into a connector or drip-feed valve or atomizer or within selected constituent part of parts thereof.

According to another aspect of the present invention there is provided a connector suitable for connecting two regions together separated by a frangible membrane, said connector comprising at least a first piece and a second piece which are capable of being snap-locked together with a frangible membrane gripped therebetween and with the connector surrounding a hole in the membrane made by the connector, and puncturing means on the connector adapted to make a hole in a frangible membrane as the connector is attached to and grips the membrane, one of said first and second pieces being provided with an integral or non-integral male portion providing said puncturing means which is capable of puncturing the frangible membrane as it is located in a female portion of the other of said first and second pieces, and after said puncturing said male portion being axially located in a snap-fit manner with the female-portion, and the connector having at least one of the following features:

-7-

a) the ends of the connector are substantially identical so that each end is adapted to be connected as a push fit into a pipe,

b) each end of the connector is provided with hole puncturing means,

c) the connector has one end generally of arrowhead shape with the length of the head of the arrow being less than or equal to the length of the neck of the arrow,

d) the male portion is axially located by snap-fit means provided about halfway along the female portion.

According to another aspect of the present invention there is provided a connector suitable for connecting two regions together separated by a wall or partition, said connector comprising at least a first piece and a second piece releasably snap-lockable together with said wall or partition gripped therebetween and with said connector surrounding a hole in said wall or partition, said first piece being provided with a male portion, which in use passes through said hole in said wall and is snap-locked in a female portion of said second piece, said second piece being generally tubular, said female portion comprising a bore and a first portion of said bore being flared in a direction towards said first piece when said first and second pieces are releasably locked together and in locking the said pieces together as said male portion is inserted in said female portion said flared first portion of said bore is engaged by a head of said male portion which resiliently deforms said second piece and/or is itself resiliently deformed until said head snap engages a locking abutment on said female

0084938

-8-

portion, at which location an annular gap is defined between said female portion and said male portion between the head and the remainder of said first piece, said first piece being separable from said second piece first by closing the gap, for example, by applying pressure at opposed locations at the end of said second piece nearest said first piece, to thereby move said locking abutment in relation to said head so that said head and male portion may then be retracted from said female portion.

According to another aspect of the present invention there is provided a connector suitable for connecting two regions together separated by a wall or partition, said connector comprising at least a first piece and a second piece which are capable of being releasably snap-locked together with a wall or partition gripped therebetween and with the connector surrounding a hole in the wall or partition, the first piece being provided with an integral or non-integral male portion, which in use passes through the hole in the wall and is snap-locked in a female portion of the second piece, said second piece being generally tubular, the female portion comprising a bore and a first portion of the bore being flared in a direction towards the first piece when said first and second pieces are releasably locked together, the arrangement being such that in locking the said pieces together as the male portion is inserted in the female portion the flared first portion of the bore is engaged by a head of the male portion which resiliently deforms the second piece and/or is itself resiliently deformed until the head snap-engages a locking abutment on the female portion, at which location a tapered annular gap is defined between the female portion and the male portion between the head and the remainder of the first piece, the axial length of the tapered gap being preferably at least equal to the axial length of the head, the first piece being separable from the second piece first by momentarily opening the gap, by pulling the first and second pieces apart, to thereby move said locking abutment in relation to said head so that said head and male portion may then be retracted from said female portion.

U.S. Patent Specification No. 4,177,947 shows a 3 way valve which can be set up to yield a drip-feed or a sprinkler feed or to shut off flow. This U.S. specification is not concerned with providing a valve in which different drip-feed flow rates may be selected or in which the drip-feed rate may be accurately varied and this may be disadvantageous in some climates where conservation of water is important, since only one drip-feed rate is selectable as shown in U.S. 4,177,947.

According to another aspect of the invention there is provided a drip-feed valve in which different drip-feed flow rates are selectable or in which the drip-feed rate of flow may be varied accurately i.e. is finely controllable. This finely controllable feature is advantageous in any situation where water is scarce and is particularly suitable for countries with low rainfall. Advantageously, the valve may comprise two parts snap-

-10-

engageable with one another preferably with said two parts co-operating on relative rotation to vary the drip feed rate progressively due to a radial or axial eccentricity.

According to another aspect of the present invention there is provided a two-part progressive flow valve for a fluid supply system in which the first part is snap-engageable into the second part and relatively rotatable therein between first and second angular positions, the arrangement being such that in the first angular position the valve is closed and in the second angular position the valve is fully open, said second part having a circular seating portion corresponding in diameter to a first circular portion of the first part so that in use the first portion is seated in the seating portion and rotatable about the axis of the seating portion, each of the first and second parts being provided with a further circular portion and these further portions being arranged eccentrically to one another, the further portion of the first part being provided with a bore extending generally radially thereof which bore is blocked off by the further portion of the second part in the first angular position with said two further portions being in engagement with a gap remote from a region surrounding the bore between said further portions, and in the second angular position the bore is not blocked off and the valve is fully open and there is gap near the region surrounding the bore between said further portions.

Advantageously, the second part may be made of

-11-

transparent plastics so that the first part may be viewed therethrough. This may enable a blockage in the valve to be seen.

The design of the valve is advantageous because it may easily be cleaned by applying pressure in a reverse direction to the flow path through the valve.

A particular embodiment is a drip-feed valve in which the aforementioned eccentricity is slight and over a wide angle of rotation ( up to almost $360^{\circ}$, for example $350^{\circ}$) the rate of flow through the valve may be increased only slightly.

Advantageously, the first and second angular positions are $180^{\circ}$ apart.

An embodiment of a fluid supply system and a drip-feed valve in accordance with the present invention will now be described by way of example only, with reference to the accompanying drawings, in which:

Figure 1 shows a cross-sectional view of a connector of the system and also a modified connector partly in chain-dotted lines;

Figure 2 shows a simplified schematic arrangement of the fluid supply system;

Figure 3 shows a sectional view of a progressive flow valve of the system; and

Figure 4 shows a sectional view taken on the line 3-3 of Figure 3.

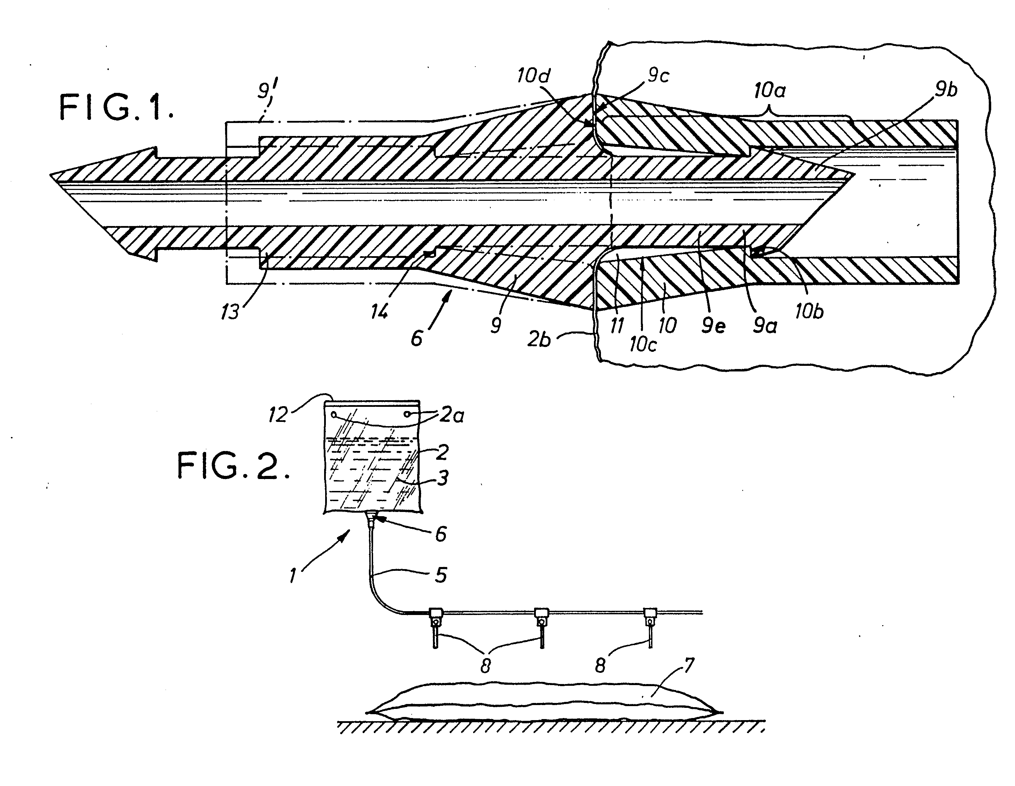

Referring to Figures 1 and 2, a fluid supply system generally designated 1 consists of a reservoir in the form of a plastics re-sealable bag 2, which contains a fluid 3, such as water or water containing nutrients for the growing of plants or vegetables. A length of piping 5 is connected to the bottom of the bag 2 by a connector 6 (shown in detail in Figure 1) and extends over a grow bag 7 which is open and which contains compost and matter to be grown, for example, seeds therein. A series of drip feed outlets 8 (three in number) are arranged along the length of piping 5 and along the grow bag 7 to feed the fluid contents 3 of the bag 2 to the contents of the grow-bag 7 in a predetermined manner. The bag 2 is provided with two holes 2a so that it may be hung up on a vertical surface as by, for example, hooks. Any suitable means may be provided by which the bag may be hung up, for example, a handle may be provided.

The connector 6 is of hard plastics but could be of any suitable material and is shown in one form in Figure 2 by solid lines and in a modified form partly in accordance with the chain-dotted lines. In the first form the connector has a generally tubular first piece 9 and a generally tubular second piece 10 only. The first and second pieces are axially aligned and are non-releasably lockable to one another by a snap-fit engagement with a wall or membrane 2b of the reservoir gripped therebetween.

The first piece 9 has an integral male connecting

-13-

portion 9 at the right-hand end thereof in snap-fit engagement with a female portion 10a of the second piece 10. The female portion 10a includes a radially inwardly extending flange or locking abutment 10b against which a head 9b of the male connecting portion 9a is axially located to restrain the first and second pieces (9,10) from being separated by relative axial movement away from one another.

In assembling the connector 6 to the bag 2 the second piece 10 is introduced into position inside the bag 2 whilst the first piece 9 is aligned axially with second but with the male portion 9a outside the bag. In this embodiment the head 9b of the male connecting portion 9a is an arrow-head shape because it is used to puncture a hole in the membrance 2b as the male portion 9a is first inserted in the female portion 10a. Alternatively, the bag 2 may already have a suitable hole or other means may be used to make the hole prior to entry of the male portion 9a into the female portion 10a. In this embodiment, as the male portion 9a is inserted axially in the female portion 10a the arrow-head punctures the membrane 2b and engages a flared or part-conical inner surface 10c of the female portion and both the head 9b and the second piece 10 are resiliently deformed until the head passes axially beyond the flange 10b to be axially seated thereon, substantially simultaneously as similar annular surfaces 10d and 9c of the second and first pieces respectively align and grip the edge of the membrance 2b surrounding the hole therebetween. An annular flared gap 11 is defined between the female portion 10a and a neck 9c of the male portion 9a which serves to trap any bits of plastics material created by puncturing the hole in membrane 2b. The gap 11 prevents the bits from entering pipe 5. Advantageously, the head 9b is smaller than the remainder of the male portion 9a, and the male and female portions 9a, 10a are dimensioned to give a reliable snap-engagement.

The left-hand end of the first piece 9 is similar to its right-hand hand and may be fitted into the pipe 5 which is co-operable therewith. The first piece 9 has an axial bore of lesser diameter than the female portion 9b to allow fluid to flow from the bag 2 to the pipe 5 and hence to the grow-bag 7 via drip feed outlets 8.

In a disassembled state all the aforementioned components of the system may be contained wholly within the bag 2, so that no other packing to sell the system to a buyer is necessary i.e. the bag itself provides such packaging. The bag 2 is also provided with a snap seal 12 so that it may be opened to receive fluid contents and closed to prevent the ingress of contaminating materials into the fluid contents.

It is to be noted that the second connector piece 10 extends some way inside the bag 2, and also some way beyond the head 9b of the male portion 9a. The connector piece 10 extends some way inside the bag 2 so that any particles or sediment in the fluid 5 which settle at the bottom of the bag are restrained

-15-

from flowing down the pipe 5. This may be an important feature, for example, where there is a likelihood that the drip feed outlets 8 would become blocked by sediment. Preferably, in such instance the second piece 10 extends about 1.75 cm from the membrane into the bag 2, and other relative dimensions of the connector 6 which are considered advantageous can be obtained directly from Figure 1. In particular the distance from abutment 10b to the right-hand end of the second piece 10 is 1 cm and this advantageously provides a thumb-protector when the first and second pieces (9, 10) are assembled together with the membrane 2b in between. The flared end of the first piece 9 can be gripped between finger and thumb of one hand and the second piece 10 can be gripped between first and second fingers of the other hand with the thumb over the open right-hand end of the second piece 10. As the head 9b is inserted into the female portion 10a it cannot project beyond the second piece and therefore any injury to the hand, or thumb in particular, should be avoided.

There any many possible modifications to the connector which are within the spirit of the present invention, one of which is shown partly in chain-dotted lines in Figure 1. In this modified embodiment the connector consists of three pieces; the second piece 10 is not modified, the first piece 9' has been modified and is now identical with the second, and the third piece consists of the male portion 9a which now axially extends through the first portion at its left-hand end.  The ends of the third piece are identical.  In assembling the connector 6 to the membrane 2b the first and second pieces (9, 10) are axially aligned and the third piece is moved axially to snap the head 9b behind the flange 10b and substantially simultaneously snap-locking the third piece to the first by the engagement of a thickened diameter portion 13 engaging a flange 14 (which is exactly similar to flange 10b) on the first piece.  The pipe 5 may be connected to the left-hand side of the third piece.

The surfaces 9c and 10d may be provided with gripping means to help grip membrane 2b, for example, said surfaces may have mating corrugations.

Advantageously, the connector 6 may have releasably snap-lockable first and second pieces. In the embodiment described release may be achieved by closing the gap 11 as by gripping the second piece 10 at its end nearest the first piece 9 at opposing locations, thereby moving the flange 10b radially outwardly relative to the head so that the head may be axially retracted.

In order to assist the movement of flange 10b pips may be provided on surface 10c to engage neck 9c or vice versa and/or the material of the connector may be chosen to assist such releasable locking action.

In an alternative embodiment release may be

-17-

achieved by opening the gap 11 momentarily by pulling the first and second pieces apart. The flared part of the female portion 10a and the thickened wall of the tapered part are important in this respect as well as the relative length of the tapered part to the head 9b and precise dimensions of gap 11.

It is to be appreciated that the male portion 9a could be on the second piece 10 and the female portion 10a on the first piece 9, so that when assembled to the bag the male portion 9a lies outside the bag 2. Additionally, the right-hand end of the second piece 10 may be substantially identical with the left-hand end of the first piece 9.

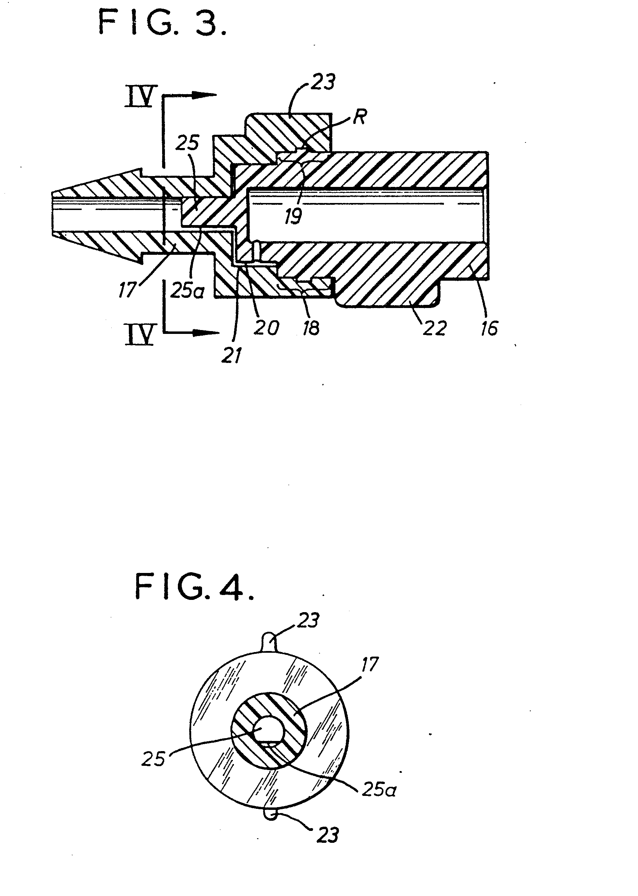

Figure 3 shows a sectional view of a two part plastics progressive-flow, drip-feed valve 15 which is suitable for one or more of the drip feed outlets 8 in the fluid supply system 1.

The valve 15 comprises a first part 16 which is snap-engageable into a second part 17 and relatively rotatable therein between first and second angular positions. As shown in Figure 3 the valve is in a fully open position (second angular position).

The second part 17 shows a circular seating portion 18 of diameter corresponding to the diameter of a first circular portion 19 of the part 16. The circular portion 19 has a raised annular rib A which is snap-engaged into a

-18-

matching annular recess in the second part 17 and as shown. The first part 16 is restrained from being pulled out axially from the second part 17 but is freely rotatable relative thereto.

Most importantly the first part 16 has a further circular portion 20 which is arranged eccentrically to a further circular portion 21 of the second part 17. On rotation of the first part 16 relative to the second part 17 from the Figure 3 position and through $180^{\circ}$ in either rotational direction the valve is fully closed and in the first angular position. Each part 16, 17 is provided with a tab 22, 23 so that the fully closed position is readily ascertained by alignment of the tabs 22, 23 parallel with the valve axis.

The eccentricity of said further circular portions 20, 21 is slight over a wide angle of relative rotation of the parts 16, 17 so that the rate of flow through the valve can be increased only slightly in stages up to the maximum flow rate when the valve is in the fully open position. A radial bore 24 in the first part 16 provides flow communication between parts 16, 17 as shown in Figure 3. In the fully closed position the bore 24 is blocked off by engagement of said further circular portions 20, 21. On relative rotation from the fully closed position a gap appears between portions 20, 21 in a region surrounding the bore 24 which gradually increased through $180^{\circ}$ until the maximum gap at the fully open position.

-19-

The described embodiment of valve provides a very sensitive drip-feed valve.

The first part 16 is provided with a generally cylindrical axial extension 25 with a flattened axial edge 25a (see Figure 4) arranged radially nearest the bore 24 to help control the flow through the valve 15.

The second part 17 may conveniently be transparent so that the first part 16 may be viewed therethrough. This may enable a blockage in the valve to be seen. The valve may easily be cleaned by applying pressure in a reverse direction to flow path through the valve. The left-hand end of the second part 17 (as shown in Figure 3) is suitable for connection to the flow pipe 5 of the fluid supply system 1 and is generally of arrow-head shape, the normal-flow direction being from left to right as shown in Figure 3. Alternatively or additionally the first part 16 may be suitable for connection to a flow pipe.

The circular portion 20 may be eccentric, or alternatively concentric with the axis of the first part 16 and accordingly the portion 21 may be concentric or eccentric respectively with said axis.

It is believed that the relative dimensions of the valve are particularly advantageous and a small, lightweight, drip valve, capable of providing a small increase in flow rate over a wide angle of relative rotation of the first and second

-20-

parts is realisable. In one embodiment the axial length of the valve is about 27mm.

The tabs 22, 23 provide an effective alignment means so that the closed and open positions of the valve 15 may readily be ascertained. Embodiments of the valve may prove very cost effective and relatively easy to manufacture.

Most importantly the drip-feed valve as described allows a variable drip-feed rate to be finely controlled on rotation of the two component parts. In the example as illustrated the first and second angular positions are $180^\circ$ apart, in an alternative embodiment these positions may be about $360^\circ$ apart, for example $350^\circ$ apart. In yet another alternative (not illustrated) instead of the finely variable drip-feed flow rate being varied by a radial eccentricity an axial eccentricity could be provided i.e. the two parts of the valve may co-operate to define an internal annular gap (closed in one relative angular position of the two parts) of varying tapering axial thickness (rather than of varying radial thickness as illustrated) so that as the two parts are rotated relative to one another the axial thickness of the gap available to fluid flowing through the valve varies accordingly (no axial displacement of the two parts need take place). Once again the eccentricity may be slight over a large angle, for example $180^\circ$ or more.

The drip-feed valve as illustrated is highly

-21-

sensitive and avoids loss of fluid that can take place through other types of valves. The valve may achieve efficiencies of 90% or more.

The materials selected for the valve may ensure very low expansion and contraction coefficients even in temperate climates.

The drip valve may be provided with a filter.

According to another aspect of the present invention there is provided an atomizer which is, or is capable of being, connected to a pressurised fluid supply, the atomizer comprising a fluid-supply connecting portion, a spray-cap releasably snap-engageable with the connecting portion and with an atomizing member held, in use, between the pressurised fluid and the spray-cap in front of an orifice of the spray-cap, the arrangement being such that, in use, fluid pressurises the atomizing member which is adapted to be rotated by the fluid pressure to atomize the fluid, said fluid being directed by the rotating atomizing member through said orifice as an atomized spray or mist.

It is an advantage of a preferred embodiment of the invention that the atomizer may consist of three individually formed component or constitutent parts only, said parts being the spray-cap, atomizing member and fluid-supply connecting portion. This provides a very neat arrangement and, is particularly important in horticultural applications, for example, where the atomizer may be easily dis-

0084938

-22-

assembled by releasing the snap engagement between the spray-cap and connecting portion in order to clean or remove a blockage from the atomizer.

Advantageously, a gap or groove may be defined between the spray-cap and connecting portion to assist in release of the snap-engagement, perhaps by the insertion of a tool or just a fingernail.

The atomizing member is, preferably, disc shaped and may have at least one face provided with surface embellishment to cause the member to rotate when pressurised generally axially by the fluid. Preferably, the or each face is provided with a central recessed area and a chordal channel configuration to direct fluid therealong from the central area in such manner as to cause the atomizing member to rotate on its axis. Preferably, in use, the chordal channels set up two couples acting in the same sense to rotate the disc.

In one embodiment in which two couples are set up as aforesaid four chordal channels are provided on each face of a disc shaped atomizing member and the one face is a mirror image of the other about a central plane of the disc. The atomizing member can be rotated clockwise or anti-clockwise depending upon which face is towards the pressurised fluid supply.

-23-

The atomizing member may fit into a matching groove defined in the connecting portion or alternatively defined in the spray-cap itself and is, preferably, held axially in place by the releasable snap-engagement between the connecting portion and spray cap.

A chamber is, preferably, defined within the atomizer in front of the atomizing member to allow some containment of the water before hitting the atomizing member.

Fluid may be passed from the atomizing member and through the spray-cap by way of holes or notches in the member and where chordal channels are provided as aforementioned notches may be provided at the end of the channels at the periphery of the atomizing member.

In a preferred embodiment the connecting portion, atomizing member and spray-cap are axially aligned and the atomizing member comprises a disc seated in a first annular groove defined in the connecting portion, and preferably, held axially in place by the spray-cap, the spray-cap being provided with an integral rib seated in a second groove adjacent said first groove to provide said snap-engagement, and preferably, an annular groove being defined between a flange on the spray-cap and the connecting portion to assist in release of the snap engagement.

-24-

Preferably, the spray-cap defines an orifice between a part-conical entrance for the fluid and larger wider-angled part-conical spray exit. The size of the orifice controls the fineness of spray or mist produced.

In an alternative embodiment the fineness of the spray or mist may be selectively controlled.

Advantageously, all the component parts of the atomizer may be of plastics.

-25-

One embodiment of an atomizer in accordance with the present invention will now be described, by way of example only, with reference to the accompanying drawings in which:

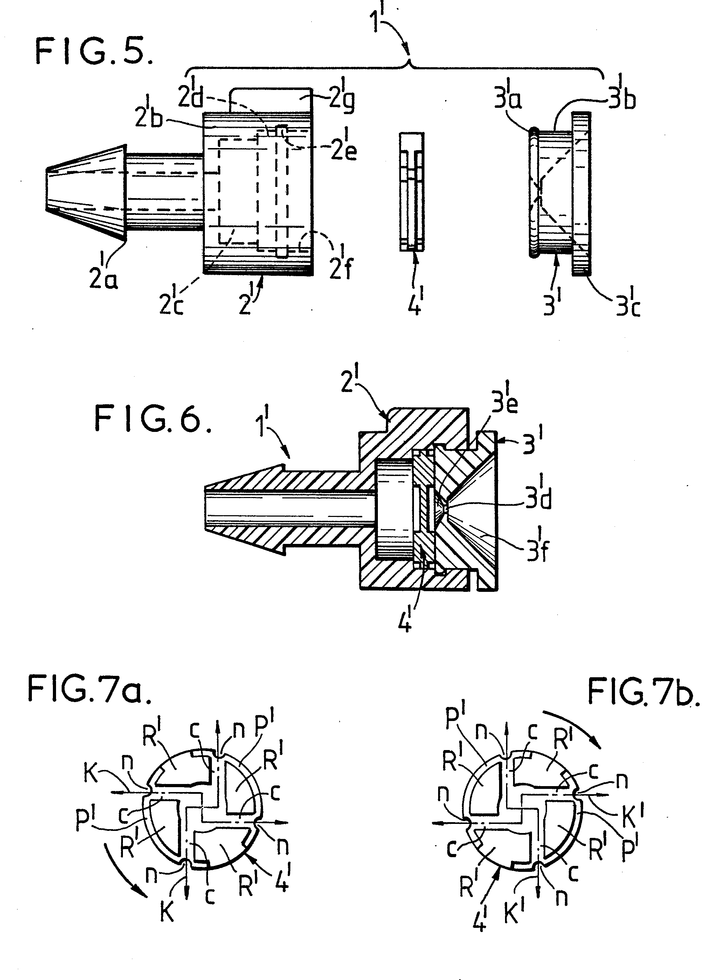

FIGURE 5 shows an exploded view of the component parts of the atomizer;

FIGURE 6 is a sectional view of the assembled components of the atomizer, and

FIGURES 7a and 7b show one of the components of the atomizer in more detail.

Referring to the FIGURES 5, 6, 7a and 7b, the atomizer 1' comprises three component parts consisting of a generally annular connecting portion 2', a generally annular end spray-cap 3', and an atomizing member 4' generally in the form of a disc. The atomizer is made from plastics.

The connecting portion 2' is provided with a connecting end 2'a which is generally of arrowhead configuration and this end 2'a may be securely connected into, for example, a plastics water supply pipe-line so that water flows axially under pressure (this might be provided by gravity) into the connecting portion 2'. The arrowhead end 2'a is integrally formed with a wider diameter portion 2'b. Wider portion 2'b receives both the disc 4' and end spray-cap 3'. From left to right of FIGURE 5 as shown in dashed lines, the portion 2'b opens out radially into an integral chamber 2'c and is

0084938

-26-

then stepped to define a disc-receiving groove 2'd of wider diameter than the chamber 2'c and stepped again to define a groove 2'e of still wider diameter for receiving a raised annular rib 3'a of cap 3'. Chamber 2'c, groove 3'd and groove 2'e are all mutually co-axial and co-axial with a further entrance portion 2'f through which the disc 4' and rib 3'a are introduced into the connecting portion 2'. The diameter of groove 2'd corresponds with diameter of entrance portion 2'f.

The connecting portion 2' is also provided with a tab 2'g for reasons explained later on.

The spray-cap 3' may be snap-engaged into the connecting portion 2' so that rib 3'a locates into groove 2'e. Rib 3'a is an annular rib on a lesser diameter portion 3'b of the spray cap; the diameter of portion 3'b matches the diameter of entrance portion 2'f and rib 3'a is resiliently deformed on introduction of the rib into entrance portion 2'f until it seats in groove 2'e. The spray-cap 3' is provided with an annular flange 3'c and when the component parts of the atomizer are assembled (as shown in FIGURE 6) the flange is spaced from the connector 2'. The spray-cap 3' defines a small orifice 3'd and a part-conical entrance 3'e leads into orifice 3'd, and a larger, wide-angled, part-conical spray exit 3'f leads out of orifice 3'd. Orifice 3'd, entrance 3'e and exit 3'f are all axially aligned with the axis of the connecting portion 2'.

-27-

Disc 4' fits loosely into groove 2'd but is held in place by spray-cap 3' as shown in FIGURE 6. FIGURES 7a and 7b show the two faces of the disc which are mirror images of one another about the central place of the disc. FIGURE 7a is a view of the disc 4' as if looking axially along connector 2' from the right-hand end of connecting portion 2' with the spray-cap 3' removed, and FIGURE 7b shows the reverse face of the disc. However, the atomizer may be assembled with the disc positioned in either way round.

Each face of the disc 3' is provided with raised areas R' defining four chordal channels C to direct water hitting the central recessed area of the disc on a respective face along the channels to respective notches n at the ends of the respective channels and at the periphery of the disc.

Ih use of the atomizer, water flows generally axially along the connecting portion 2' and into the chamber 2'c and immediately spreads over substantially the area of one face of the disc 3' bar the peripheral region seated in groove 2'd. This peripheral region is provided with opposed arc channels P' defined by the raised areas R', and each arc channel P' contains two of the notches n as shown in FIGURES 7a and 7b. The water at the centre of the disc is directed along channels C and as shown in FIGURE 7a effectively sets up two couples K which cause the disc to rotate anti-clockwise as shown. Water emerges from the other face of the disc via notches n and is directed by the channels on the reverse face to the centre of the disc and to part-conical entrance 3'e, through orifice 3'd and out of exit 3'f as a fine spray. If the disc is assembled the reverse way round couples K' are set up as shown in FIGURE 7b and the disc rotates clockwise with similar atomizing effect on the water.

Still further according to the present invention there is provided a kit of parts in which chosen parts of the kit are adapted to be selectively assembled to make an atomizer and one of said chosen parts being selectively alternatively assemblable with a further part of the kit to make a drip-feed valve so that said further part is common to both the atomizer and drip-feed valve, said further part being, preferably a connecting portion to connect the atomizer or drip-feed valve to a water supply, and/or being a housing receiving the remaining part or parts of the atomizer/drip feed valve.

The kit may only comprise four parts, two parts of which and said further part being the components of the atomizer and the third part and said further part being the components of the drip feed valve.

The atomizer may be of the general form as aforementioned and the connecting portion of the atomizer is, preferably, said further part common to both the atomizer and drip-feed valve.

-29-

The drip-feed valve may be of the general form as herein afore described.

The tab 2g is redundant for the atomizer but may be used for the drip-feed valve in conjunction with a tab on said further part in a manner as previously described.

The kit of parts may include enough parts to make several atomizers or drip-feed valves and once the atomizer or drip-feed valve has been selectively assembled it need not necessarily be readily dismantlable.

In a further development of the Atomizer it has been found contrary to expectation that the atomizing member does not necessarily have to be rotated to atomize the fluid. In fact a finer spray may result if the atomizing member is prevented from being rotated, for example by appropriate dimensioning of the atomizer constituent parts. Therefore the atomizing member may be held against rotation by any suitable means and may possibly be integrally formed or substantially permanently affixed to either the spray-cap or connecting portion.

The kit of parts in which chosen parts of the kit may be selectively assembled to make the atomizer or drip-feed valve may vary according to this last-mentioned development.

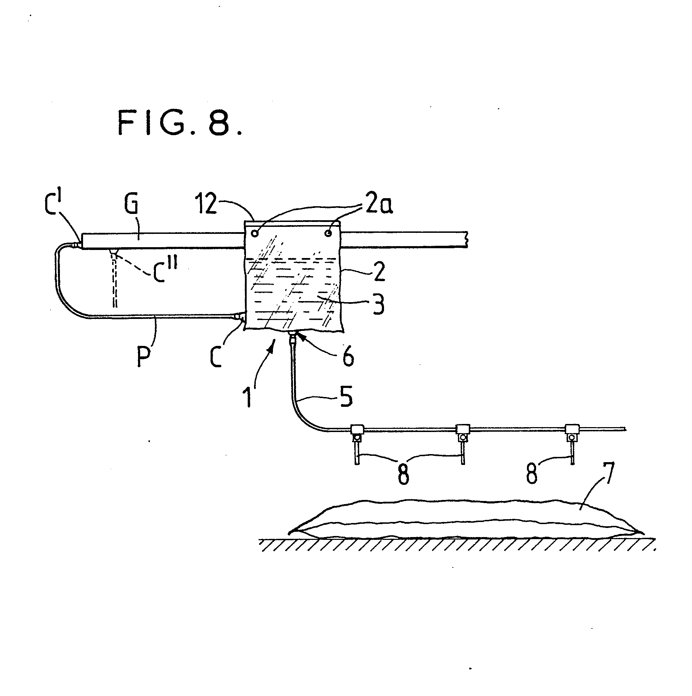

An embodiment of a method of supplying water to one or more supplying outlets in accordance with present invention will now be described, by way of example, with reference to FIGURE 8 of the accompanying drawings which shows the fluid supply system of FIGURE 1 hooked up to a rainwater guttering.

The components of the fluid system 1 which may be contained in the reservoir 2 may also comprise piping P and two connectors C, C', or C". As shown the piping is connected between rainwater guttering of, in this example, a greenhouse (not illustrated), and a second connection point on the reservoir 2. This connection point could be at any convenient location on the bag 2 and connector C may be identical to connector 6 and piping P connected to the reservoir 2 in the same manner as piping 5 is connected to the reservoir 2. The other end of piping P may be connected to the flat end part of guttering G or to the bottom thereof (as shown by the modification in dashed lines) or to any convenient part of the guttering. The connector C', C" which is attached to the guttering G may be of any suitable form and may include a filter to filter out bits of leaves, grit and such like which could collect in the guttering. The connector C', or C" could take the form of the atomizer is illustrated in which the rotating disc is replaced by a fixed filter mesh grid, the connecting portion of the atomizer extending downwards through a hole in the guttering or projecting outwardly from the end thereof.

0084938

As shown the bag 2 has a re-sealable opening and to avoid the contents of the bag spilling in high rainfall the bag is raised to a level in which the opening is above the water-level achievable in the guttering. Conveniently, means is provided to the hook the bag 2 to the guttering (perhaps by making use of holes 2a) so that at least a portion of the bag is raised above the level of the guttering.

If the reservoir 2 is permanently sealed or closed after the contents thereof have been removed in some embodiments it need not be absolutely necessary for the reservoir to occupy a level substantially the same as that of the guttering G .

The drip feed outlets 8 in Figure 8 could of course be replaced by atomizers.

-32-

CLAIMS

1. A fluid supply system comprising a reservoir and at least one length of piping connectable, or connected, thereto by a connector, said connector having at least a first piece and a second piece which are capable of being, or which are, snap-locked together with a wall of the reservoir gripped therebetween, and with the connector surrounding a hole in the wall of the reservoir, the connector and said length of piping being co-operable to engage, or being in engagement with, each other so that, in use of the supply system, fluid is capable of being supplied from the reservoir through the connector and hole and through the length of piping to one or more supply outlets, said reservoir being of such size and dimensions relative to the remainder of the system that said remainder is adapted to be, or is, wholly contained in said reservoir when said remainder is not connected to said reservoir.

2. A system as claimed in Claim 1:

(a) in which said first and second pieces are generally tubular and one of said first and second pieces has a male connecting portion at one end thereof to snap into a female portion of the other one of said first and second pieces, and said female portion includes radially extending flange means to axially locate said male connecting portion in a snap-fit manner with said female portion, and preferably, in which said female portion and/or said male portion is resiliently deformed as said male portion is engaged in said female portion;

or

(b) in which said connector comprises a third piece, said first piece being a snap-fit engagement with said third piece and said second piece being a snap-fit engagement with one end of said third piece and, preferably, in which said end of said third piece is substantially identical to the other end of said third piece and, preferably, in which said ends of said third piece extend beyond the ends of said first piece so that said pipe is attachable to said end of said third piece not engaging or not intended to engage said second piece, and, preferably, in which said first piece is substantially identical with said second piece and, preferably, in which the first piece is not resiliently deformed but rather snap-locked against an abutment on said second piece substantially simultaneously as said second and third pieces are snap-locked together;

or

(c) in which said connector is provided with means to puncture said hole in said wall of said reservoir and, preferably, in which said hole is punctured automatically as said first and second pieces are snap-locked together with said wall of said reservoir therebetween and, preferably, in which said hole puncturing means is provided on one of said first and second pieces where no third piece is provided or on said third piece, preferably at each end of said third piece, where said third piece is provided, said hole puncturing means preferably being of arrow head shape, and preferably in which said first and second pieces flare outwardly at their ends which are held adjacent one another in use with said wall of said reservoir, preferably, held between said

-34-

adjacent ends, and, preferably, in which:  said
connector is of hard plastics;  said reservoir
is a plastics bag;  said wall of said reservoir
is a frangible plastics membrane, and preferably
in which a snap-seal is provided at an open end
of said reservoir.

3.   A fluid supply system as claimed in any one
of  the preceding claims comprising at least one
drip-feed valve (preferably having a finely
controllable variable drip-feed flow rate) and/or
at least one atomizer.

4.   A method of supplying water to one or more
supply outlets using the fluid supply system
according to any one of the preceding claims in
which rainwater is delivered from a rainwater
guttering (for example of a greenhouse) or the
like to the reservoir, and, preferably in which a
top portion of the reservoir is fixed above the
level of the rainwater guttering so that the
reservoir cannot overflow.

5.   A drip-feed valve having a finely-controllable
variable drip-feed rate.

6.   A connector suitable for connecting two regions
together separated by a frangible membrane, said
connector comprising at least a first piece and
a second piece which are capable of being snap-
locked together with a frangible membrane gripped
therebetween and with the connector surrounding a
hole in the membrane made by the connector, and puncturing means on the connector adapted to make a hole in a frangible membrane as the connector is attached to and grips the membrane, one of said first and second pieces being provided with an integral or non-integral male portion providing said puncturing means which is capable of puncturing the frangible membrane as it is located in a female portion of the other of said first and second pieces, and after said puncturing said male portion being axially located in a snap-fit manner with the female portion, and the connector having at least one of the following features:

(a) the ends of the connector are substantially identical so that each end is adapted to be connected as a push fit into a pipe,

(b) each end of the connector is provided with hole puncturing means,

(c) the connector has an end generally of arrowhead shape, the head of the arrow being less than or equal to the length of the neck of the arrow,

(d) the male portion is axially located by snap-fit means provided about halfway along the female portion, or

a connector suitable for connecting two regions together separated by a wall or partition, said connector comprising at least a first piece and a second piece releasably snap-lockable together with said wall or partition gripped therebetween and with said connector surrounding a hole in said wall or partition, said first piece being provided with a male portion, which in use passes through said hole in said wall and is snap-locked in a female portion of said second piece, said second piece being generally tubular, the female portion comprising a bore and a first portion of the bore being flared in a direction towards the first piece when said first and second pieces are releasably locked together, the arrangement being such that in locking the said pieces together as the male portion is inserted in the female portion the flared first portion of the bore is engaged by a head of the male portion which resiliently deforms the second piece and/or is itself resiliently deformed until the head snap-engages a locking abutment on the female portion, at which location a tapered annular gap is defined between the female portion and the male portion between the head and the remainder of the first piece, the axial length of the tapered gap being preferably at least equal to the axial length of the head, the first piece being separable from the second piece first by momentarily opening the gap, by pulling the first and second pieces apart.

7. A two-part progressive flow valve for a fluid supply system in which the first part is snap-engageable into the second part and relatively rotatable therein between first and second angular positions, in said first angular position said valve is closed and in said second angular position said valve is fully open, said second part having a circular seating portion corresponding in diameter to a first circular portion of said first part so that in use said first portion is seated in said seating portion and rotatable about the

0084938

-37-

axis of said seating portion, each of said first and second parts being provided with a further circular portion and these further portions being arranged eccentrically to one another, said further portion of said first part being provided with a bore extending generally radially thereof, which bore is blocked off by said further portion of said second part in said first angular position with said two further portions in engagement with a gap remote from a region surrounding said bore between said further portions, and in said second angular position said bore is not blocked off and said valve is fully open and there is a gap near the region surrounding said bore between said further portions, and,

preferably, in which said second part is made of transparent plastics.

8. A valve as claimed in Claim 7 in which said eccentricity is slight and over a wide angle of rotation, for example 180°, the rate of flow through the valve is increased only slightly, said valve being a drip-feed valve, and preferably, said valve having alignment means, for example, a tab on each of the first and second valve parts.

9. An atomizer which is, or is capable of being, connected to a pressurised fluid supply, the atomizer comprising a fluid-supply connecting portion, a spray-cap releasably snap-engageable with the connecting portion and with an atomizing member held, in use, between the pressurised fluid and the spray-cap in front of an orifice of the

-38-

spray-cap, the arrangement being such that, in use, fluid pressurises the atomizing member which is, or is not, adapted to be rotated by the fluid pressure to atomize the fluid, said fluid being directed by the atomizing member through said orifice as an atomized spray or mist.

10. A kit of parts in which chosen parts of the kit are adapted to be selectively assembled to make an atomizer and one of said chosen parts being selectively alternatively assemblable with a further part of the kit to make a drip-feed valve so that said further part is common to both the atomizer and drip-feed valve, said further part being, preferably a connecting portion to connect the atomizer or drip-feed valve to a water supply, and/or being a housing receiving the remaining part or parts of the atomizer/drip feed valve.

0084938

FIG.1.

FIG.2.

# FIG. 3.

# FIG. 4.

0084938

FIG.5.

FIG.6.

FIG.7a.

FIG.7b.

# FIG. 8.